# EUROPÄISCHE PATENTANMELDUNG

(11) **EP 2 977 247 A1**
(43) Veröffentlichungstag der Anmeldung: **27.01.2016**
(21) Anmeldenummer: 15001533.7
(22) Anmeldetag: 21.05.2015
(51) Int. Cl.: B60J 7/057, B60J 7/02, B60J 7/14, B60J 7/185, B60J 7/22

(54) **VERDECK FÜR EIN ÖFFNUNGSFÄHIGES FAHRZEUGDACH**

(30) Priorität: 25.07.2014 DE 102014010962
(71) Anmelder: AUDI AG, 85045 Ingolstadt (DE)
(72) Erfinder: Dillinger, Andreas, DE - 93309 Kelheim (DE)

(57) **Zusammenfassung**

Die Erfindung betrifft ein Verdeck (20) für ein öffnungsfähiges Fahrzeugdach (2), welches mindestens zwei Verdeckabschnitte (22, 24, 26) aufweist, wobei ein vorderer erster Verdeckabschnitt (22) mit einem Windschutzscheibenquerträger (5) koppelbar ist, wobei mindestens ein Verdeckabschnitt (22, 26) verschiebbar ausgeführt ist und ein hinterer zweiter Verdeckabschnitt (24) schwenkbar und/oder absenkbar ausgeführt ist. Erfindungsgemäß ist ein dritter Verdeckabschnitt (26) flexibel ausgeführt und zwischen dem ersten Verdeckabschnitt (22) und zweiten Verdeckabschnitt (24) angeordnet und durch eine selbsttragende Schub- und/oder Zugvorrichtung (30) angetrieben, wobei der dritte Verdeckabschnitt (26) bei einem Öffnungsvorgang derart über den hinteren zweiten Verdeckabschnitt (24) faltbar ist, dass nach dem Faltvorgang eine Außenseite des dritten Verdeckabschnitts (26) einer Außenseite des zweiten Verdeckabschnitts (24) zugewandt ist.

## Beschreibung

Die Erfindung betrifft ein Verdeck für ein öffnungsfähiges Fahrzeugdach gemäß dem Oberbegriff des Patentanspruchs 1.

Verdecke für öffnungsfähige Fahrzeugdächer sind in zahlreichen Variationen bekannt. Üblicherweise weisen die Verdecke mindestens zwei Verdeckabschnitte auf, wobei ein vorderer erster Verdeckabschnitt mit einem Windschutzscheibenquerträger koppelbar ist und ein hinterer zweiter Verdeckabschnitt eine flächige Heckscheibe aufweist. Diese Verdecke werden meist über einen Drehpunkt bewegt, wobei das Verdeck hoch über dem Fahrzeug bewegt wird. Dadurch ist ein enormer Kraftaufwand erforderlich und somit auch robuste und schwere Antriebsmechaniken und Antriebe. Die Faltung des Verdecks wird beispielsweise durch Scherengelenke gewährleistet. Alternativ zur Ausführung mit einem Drehpunkt kann ein Verdeckabschnitt zwischen Längsträgern des Fahrzeugdachs geführt werden. Das bedeutet, dass mindestens ein Verdeckabschnitt verschiebbar ausgeführt ist.

Aus der DE 197 04 846 A1 ist ein Verdeck für ein motorisiertes puristisches Personenkleinfahrzeug bekannt, welche insbesondere als so genannte Roadster oder Speedster ausgeführt sind. Bei diesen Personenkleinfahrzeugen ist ein Verdeckmittelteil an einem Heckteil zwischen einer zwischen Sitzpositionen abgesenkten Stellung und einer an einer Oberkante einer Windschutzscheibe abgestützten angehobenen Stellung schwenkbar gelagert. Zwei von dem Verdeckmittelteil geführte zusammenschiebbare Abdeckungen sind in der angehobenen Stellung des Verdeckmittelteils beidseitig aus einer verdeckten hinter den Sitzpositionen liegenden Stellung nach vorne über die Sitzpositionen schiebbar.

Aus der DE 101 20 358 A1 ist ein Fahrzeug mit einem gattungsgemäßen Verdeck für ein öffnungsfähiges Dach bekannt. Das Fahrzeug weist zwei entfernbare seitliche Dachrahmen mit rückwärts sich daran anschließenden C-Säulen auf. Ein verschiebbares Dachelement, insbesondere ein Faltschiebdach oder ein Lamellendach, ist in Führungen der seitlichen Dachrahmen aufgenommen. Ein flächiges hinteres Dachelement, insbesondere eine Heckscheibe, ist schwenkbar an der Karosserie gelagert. Das verschiebbare Dachelement ist in einer vollständig geöffneten hinteren Endstellung in einem dem flächigen Dachelement zugeordneten Aufnahmebereich aufgenommen.

Die Aufgabe der Erfindung ist es, ein Verdeck für ein öffnungsfähiges Fahrzeugdach für ein Fahrzeug zu schaffen, welches mit einem geringen Kraftaufwand zwischen einer geschlossenen Stellung und einer nichtsichtbaren Ablagestellung bewegbar ist, wobei das Verdeck in der Ablagestellung einen geringeren Stauraum als bei üblichen Konstruktionen einnimmt.

Erfindungsgemäß wird die Aufgabe durch Bereitstellung eines Verdecks für ein öffnungsfähiges Fahrzeugdach mit den Merkmalen des Patentanspruchs 1 gelöst. Vorteilhafte Ausführungsformen und Weiterbildungen der Erfindung sind in den abhängigen Ansprüchen angegeben.

Um ein Verdeck für ein öffnungsfähiges Fahrzeugdach zu schaffen, welches mit einem geringen Kraftaufwand zwischen einer geschlossen Stellung und einer nichtsichtbaren Ablagestellung bewegbar ist, wobei das Verdeck in der Ablagestellung einen geringeren Stauraum einnimmt als bei üblichen Konstruktionen, ist ein dritter Verdeckabschnitt flexibel ausgeführt und zwischen einem vorderen ersten Verdeckabschnitt und einem hinteren zweiten Verdeckabschnitt angeordnet und durch eine selbsttragende Schub- und/oder Zugvorrichtung angetrieben. Hierbei ist der dritte Verdeckabschnitt bei einem Öffnungsvorgang derart über den hinteren zweiten Verdeckabschnitt faltbar, dass nach dem Faltvorgang eine Außenseite des dritten Verdeckabschnitts einer Außenseite des zweiten Verdeckabschnitts zugewandt ist. In vorteilhafter Weise ist der dritte Verdeckabschnitt in der geschlossenen Stellung des Fahrzeugdachs zwischen den ersten und den zweiten Verdeckabschnitt gespannt. Durch die flexible Ausführung des dritten Verdeckabschnitts, kann in vorteilhafter Weise eine Knickbildung des dritten Verdeckabschnitts größtenteils vermieden werden. Zudem entstehen weniger Scheuerstellen als bei aus dem Stand der Technik bekannten Fahrzeugverdecken. Durch die Minimierung von Scheuerstellen kann in vorteilhafter Weise ein ästhetischeres Erscheinungsbild des Verdecks gewährleistet werden. Zudem kann auf Scherengelenke verzichtet werden, wodurch in vorteilhafter Weise das Gefährdungspotential durch die Verdeckbewegung reduziert werden kann. Des Weiteren kann die Bewegungsrichtung des dritten Verdeckabschnitts in vorteilhafter Weise im Wesentlichen einer Fahrzeuglängsrichtung entsprechen. Mit dem erfindungsgemäßen Aufbau sind in vorteilhafter Weise unterschiedliche Designmöglichkeiten für das Fahrzeug möglich, so dass das Verdeck einfach an unterschiedliche Fahrzeugmodelle angepasst werden kann. Zudem wird das Verdeck in vorteilhafter Weise nicht im großen Bogen über dem Fahrzeug bewegt, wodurch in vorteilhafter Weise ein geringerer Kraftaufwand zum Bewegen des Verdecks, insbesondere bei Gegenwind, erforderlich ist, so dass kleinere Antriebe verwendet werden können. Zudem sind ein schnellerer Verdecklauf und eine geringere Geräuschbildung beim Öffnen und Schließen des Fahrzeugdachs möglich. Da der dritte Verdeckabschnitt in einer offenen Stellung am zweiten Verdeckabschnitt anliegt, kann der dritte Verdeckabschnitt über eine Schwenkbewegung des zweiten Verdeckabschnitts versenkt werden. Dadurch kann in vorteilhafter Weise der Bauraumbedarf des Verdecks in der Ablagestellung verringert und mehr Platz im Innenraum des Fahrzeugs bzw. mehr Stauraum im Kofferraum des Fahrzeugs geschaffen werden.

In vorteilhafter Ausgestaltung des erfindungsgemäßen Verdecks kann der vorderer erste Verdeckabschnitt zumindest teilweise starr ausgeführt und mit einem ersten Ende des faltbaren dritten Verdeckabschnitts drehbeweglich verbunden werden. Die drehbewegliche Verbindung kann beispielsweise über Scharniere oder elastische Elemente wie Bänder umgesetzt werden. Dadurch ist in vorteilhafter Weise ein modulares Verdeck umsetzbar. Zudem kann der erste Verdeckabschnitt in vorteilhafter Weise mehrere Aufgaben erfüllen. Beispielsweise kann der erste Verdeckabschnitt als Führungselement für den dritten Verdeckabschnitt wirken. Zudem kann der erste Verdeckabschnitt Elemente zum Verriegeln des Verdecks an einer Fahrzeugkarosserie aufweisen.

In weiterer vorteilhafter Ausgestaltung des erfindungsgemäßen Verdecks kann ein zweites Ende des faltbaren dritten Verdeckabschnitts drehbeweglich mit dem hinteren zweiten Verdeckabschnitt verbunden werden. Auch hier kann die drehbewegliche Verbindung beispielsweise über Scharniere oder elastische Elemente wie Bänder umgesetzt werden.

In weiterer vorteilhafter Ausgestaltung des erfindungsgemäßen Verdecks kann der vordere erste Verdeckabschnitt mit der Schub- und/oder Zugvorrichtung gekoppelt werden, welche den ersten Verdeckabschnitt im Wesentlichen entlang der Fahrzeuglängsrichtung bewegt, wobei der erste Verdeckabschnitt den dritten Verdeckabschnitt während des Öffnungsvorgangs über den zweiten Verdeckabschnitt schiebt und während eines Schließvorgangs vom zweiten Verdeckabschnitt zieht. In einer möglichen Ausführungform sind die Verdeckabschnitte etwa gleich lang ausgeführt, so dass der zweite Verdeckabschnitt in der geöffneten Verdeckstellung unter dem dritten Verdeckabschnitt angeordnet ist und der erste Verdeckabschnitt über dem dritten Verdeckabschnitt angeordnet ist.

In weiterer vorteilhafter Ausgestaltung des erfindungsgemäßen Verdecks kann die Schub- und/oder Zugvorrichtung mindestens eine Kette mit mehreren Schub- und/oder Zugelementen umfassen, welche in einer im Bereich des zweiten Verdeckabschnitts angeordneten Führung geführt sind. Zudem kann an den Schub- und/oder Zugelementen jeweils eine Scheibendichtung mit einem Aufnahmeschlitz angeordnet werden, in welchen ein freier Rand einer Seitenscheibe einfahrbar ist. Des Weiteren können jeweils zwei benachbarte Schub- und/oder Zugelemente über ein Drehgelenk miteinander verbunden werden, wobei die zwei benachbarten Schub- und/oder Zugelemente durch Verriegelungsmittel gegeneinander verriegelt werden können. Durch die gegenseitige Verriegelung kann die mindestens eine Kette selbsttragend verschoben werden. So kann die Schub- und/oder Zugvorrichtung beispielsweise zwei Ketten umfassen, welche in Fahrzeuglängsrichtung jeweils an den seitlichen Rändern des Verdecks verlaufen. Alternativ kann die Schub- und/oder Zugvorrichtung nur eine Kette umfassen, welche in Fahrzeuglängsrichtung entlang einer Mittellängsachse des Verdecks verläuft.

In weiterer vorteilhafter Ausgestaltung des erfindungsgemäßen Verdecks kann die Schub- und/oder Zugvorrichtung einen Antrieb aufweisen, welcher die mindestens eine Kette bewegt. Der Antrieb kann beispielsweise über ein Antriebsritzel oder einen Seilzug mit der mindestens einen Kette gekoppelt werden.

In weiterer vorteilhafter Ausgestaltung des erfindungsgemäßen Verdecks können zwei benachbarte Schub- und/oder Zugelemente beispielsweise durch einen Zahnriemen oder einen Verriegelungshaken oder einen Verriegelungsbolzen gegeneinander verriegelt werden. Des Weiteren kann ein Trennelement während des Öffnungsvorgangs des Verdecks die Verriegelungsmittel zwischen zwei benachbarten Schub- und/oder Zugelementen entriegeln. Zudem kann ein Verbindungselement vorgesehen werden, welches während des Schließungsvorgangs des Verdecks die Verriegelungsmittel zwischen zwei benachbarten Schub- und/oder Zugelementen gegeneinander verriegeln kann. Hierbei kann das Verbindungselement an einem Übergangsbereich zwischen dem zweiten Verdeckabschnitt und dem dritten Verdeckabschnitt in Öffnungsrichtung vor dem Trennelement angeordnet werden.

Vorzugsweise kann der dritte Verdeckabschnitt aus einem elastischen Material gefertigt werden, welches nach einer Belastung in eine Ausganglage zurückkehrt. Des Weiteren kann der dritte Verdeckabschnitt in Längsrichtung und/oder in Querrichtung mindestens ein Stützelement aufweisen, welche den dritten Verdeckabschnitt im geschlossenen Verdeckzustand abstützt. Das mindestens eine Stützelement kann beispielsweise als aufblasbares Element und/oder als faltbares Metallelement und/oder Kunststoffelement ausgeführt werden. In vorteilhafter Weise kann eine Steifigkeit des dritten Verdeckabschnitts sowie eine Formgebung des dritten Verdeckabschnitts durch das mindestens eine Stützelement vorgegeben werden. Zudem können mehrere Stützelemente ein Gerippe ausbilden, über welches das elastische Material gespannt ist.

In weiterer vorteilhafter Ausgestaltung des erfindungsgemäßen Verdecks kann der erste Verdeckabschnitt über mindestens ein Verrieglungselement mit dem Windschutzscheibenquerträger verriegelt werden. Hierbei können die Verrieglungselemente als Riegel bzw. Verriegelungshaken oder als korrespondierende Aufnahmen ausgeführt werden, welche mit dem Riegel bzw. Verriegelungshaken zusammenwirken. Die Riegel bzw. Verriegelungshaken und Aufnahmen können jeweils karosserieseitig und/oder verdeckseitig angeordnet werden. Bei einer bevorzugten Ausführungsform kann das mindestens eine Verriegelungselement als ausfahrbares Luftleitelement ausgeführt werden, welches im geschlossenen Verdeckzustand eingefahren ist und den ersten Verdeckabschnitt am Windschutzscheibenquerträger festlegt. Das Luftleitelement kann vor dem Öffnungsvorgang des Verdecks ausgefahren werden und den ersten Verdeckabschnitt freigeben. Hierbei kann das Luftleitelement im geöffneten Verdeckzustand je nach Bedarf ausgefahren oder eingefahren werden.

Vorteilhafte Ausführungsformen der Erfindung sind in der Zeichnung dargestellt und werden nachfolgend beschrieben. In der Zeichnung bezeichnen gleiche Bezugszeichen Komponenten bzw. Elemente, die gleiche bzw. analoge Funktionen ausführen.

Dabei zeigen:
- Fig. 1: eine schematische Seitenansicht eines Fahrzeugs mit einem Ausführungsbeispiel eines erfindungsgemäßen Verdecks für ein Fahrzeugdach in einer geschlossenen Stellung,
- Fig. 2: eine schematische Seitenansicht des Fahrzeugs mit dem Ausführungsbeispiel des erfindungsgemäßen Verdecks aus Fig. 1 in einer ersten Zwischenstellung,
- Fig. 3: eine schematische Seitenansicht des Fahrzeugs mit dem Ausführungsbeispiel des erfindungsgemäßen Verdecks aus Fig. 1 und 2 in einer zweiten Zwischenstellung vor dem Absenken in eine Ablagestellung,
- Fig. 4: eine schematische Seitenansicht des Fahrzeugdachs aus Fig. 1 in einer geschlossenen Stellung,
- Fig. 5: eine schematische Schnittdarstellung eines dritten Verdeckabschnitts des Verdecks aus Fig. 1 bis 4,
- Fig. 6: eine schematische Darstellung eines Ausführungsbeispiels einer Schub- und/oder Zugvorrichtung für das erfindungsgemäße Verdeck aus Fig. 1 bis 5,
- Fig. 7: eine schematische Schnittdarstellung eines Schub- und/oder Zugelements für die Schub- und/oder Zugvorrichtung aus Fig. 6,
- Fig. 8: eine schematische Schnittdarstellung eines Ausführungsbeispiels von zwei benachbarten Schub- und/oder Zugelementen im entriegelten Zustand,
- Fig. 9: eine schematische Schnittdarstellung der zwei benachbarten Schub- und/oder Zugelemente aus Fig. 8 im verriegelten Zustand,
- Fig. 10: eine schematische Schnittdarstellung eines weiteren Ausführungsbeispiels von zwei benachbarten Schub- und/oder Zugelementen im entriegelten Zustand,
- Fig. 11: eine schematische Schnittdarstellung der zwei benachbarten Schub- und/oder Zugelemente aus Fig. 10 im verriegelten Zustand, und
- Fig. 12: eine schematische Draufsicht auf den dritten Verdeckabschnitt des Verdecks aus Fig. 1 bis 5.

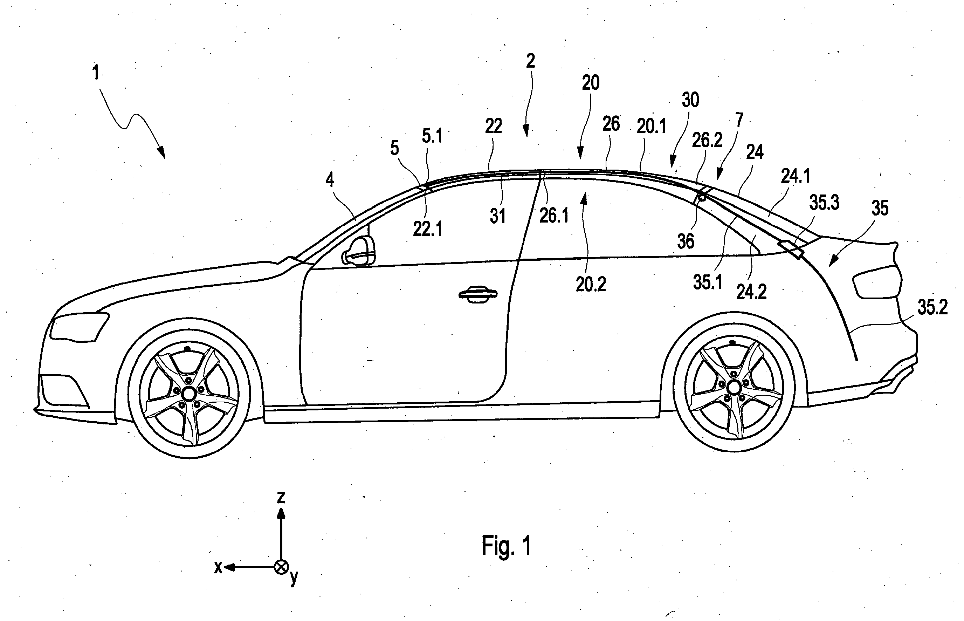

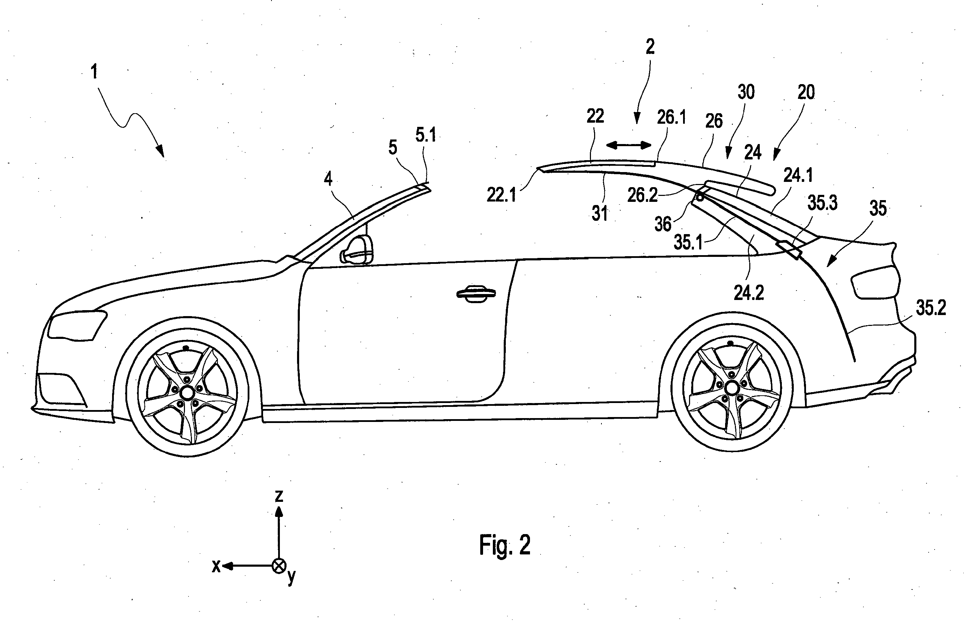

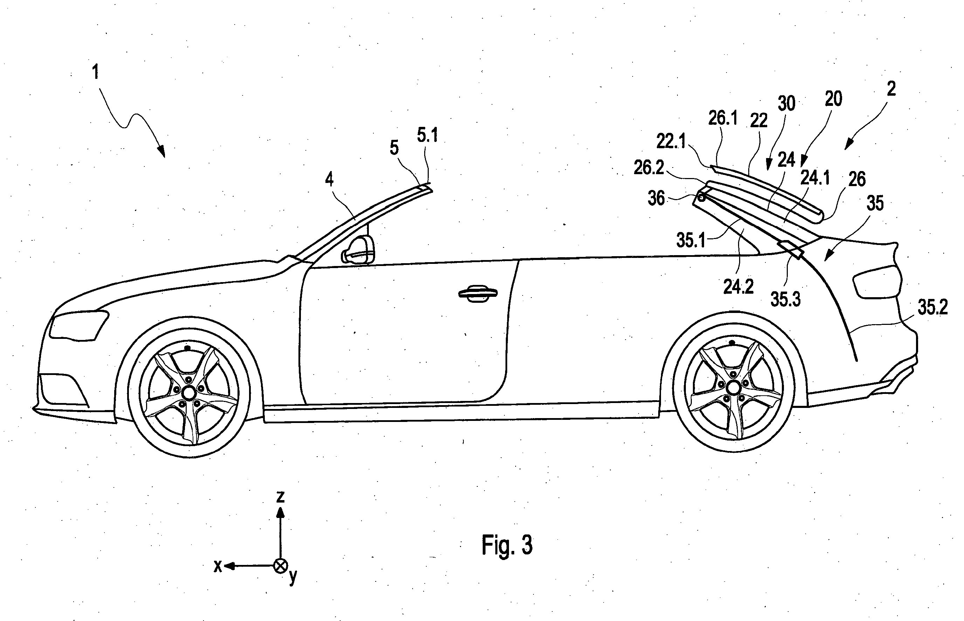

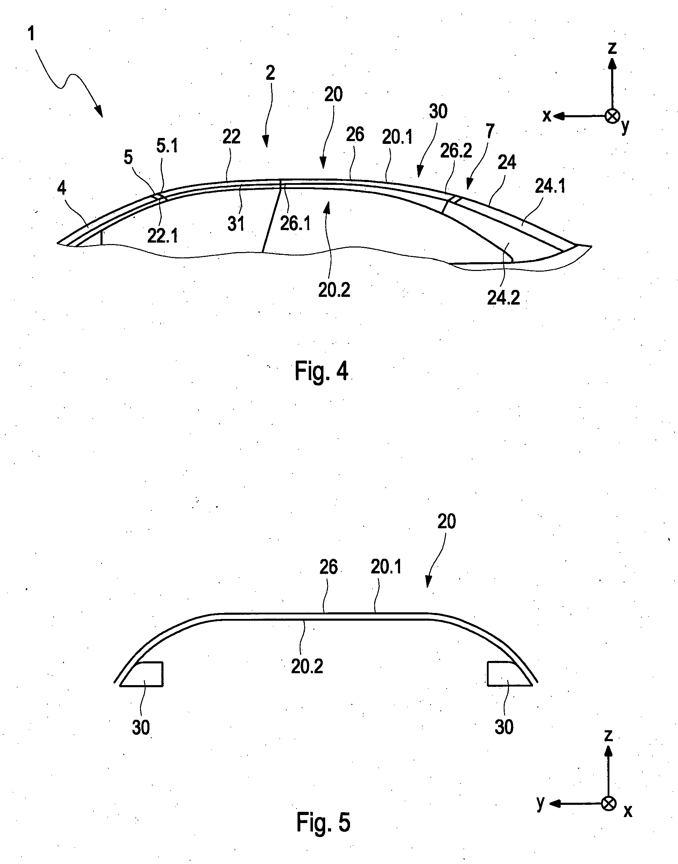

Wie aus Fig. 1 bis 5 ersichtlich ist, weist ein Fahrzeug 1 im dargestellten Ausführungsbeispiel eine Windschutzscheibe 4 mit einem Windschutzscheibenquerträger 5 und ein öffnungsfähige Fahrzeugdach 2 mit einem Verdeck 20 auf. Das Fahrzeugdach 2 kann eine in Fig. 1 und 4 dargestellte geschlossene Stellung, in Fig. 2 und 3 dargestellte Zwischenstellungen und eine nicht näher dargestellte Ablagestellung aufweisen. In der geschlossenen Stellung verschließt das Verdeck 20 das Fahrzeug 1 von oben, so dass weder Wind noch Feuchtigkeit in den Fahrzeuginnenraum gelangen können. In den Zwischenstellungen ist das Fahrzeug 1 zumindest teilweise nach oben offen. In der Ablagestellung ist das Verdeck 20 beispielsweise in einem vorgegebenen Stauraum im Fahrzeugheck abgelegt. Beim Übergang von der geschlossen Stellung in die Ablagestellung und umgekehrt weist das Verdeck 20 mehrere Zwischenstellungen auf.

Wie aus Fig. 1 bis 5 weiter ersichtlich ist, weist das Verdeck 20 für das öffnungsfähige Fahrzeugdach 2 mehrere Verdeckabschnitte 22, 24, 26 auf, wobei ein vorderer erster Verdeckabschnitt 22 mit dem Windschutzscheibenquerträger 5 koppelbar ist und mindestens ein Verdeckabschnitt 22, 26 verschiebbar ausgeführt ist. Ein hinterer zweiter Verdeckabschnitt 24 ist schwenkbar und/oder absenkbar ausgeführt.

Erfindungsgemäß ist ein dritter Verdeckabschnitt 26 flexibel ausgeführt und zwischen dem ersten Verdeckabschnitt 22 und dem zweiten Verdeckabschnitt 24 angeordnet, wobei der dritte Verdeckabschnitt 23 durch eine selbsttragende Schub- und/oder Zugvorrichtung 30 antreibbar ist. Zudem ist der dritte Verdeckabschnitt 26 bei einem Öffnungsvorgang derart über den hinteren zweiten Verdeckabschnitt 24 faltbar, dass nach dem Faltvorgang eine Außenseite des dritten Verdeckabschnitts 26 einer Außenseite des zweiten Verdeckabschnitts 24 zugewandt ist.

Wie aus Fig. 1 bis 5 weiter ersichtlich ist, ist ein modulares Verdeck 20 umsetzbar, welches einfach an unterschiedliche Fahrzeugmodelle angepasst werden kann. Zudem weist das Fahrzeugdach 2 keine Längsträger bzw. Längsführungen auf, in welchen der erste und dritte Verdeckabschnitt 22, 26 während des Öffnungsvorgangs des Verdecks 20 geführt sind. Im dargestellten Ausführungsbeispiel weist der hintere zweite Verdeckabschnitt 24 eine flächige Heckscheibe 24.1 auf. Die Verdeckabschnitte 22, 24, 26 sind an der Außenseite mit einem Verdeckstoff 20.1 bezogen und weisen eine Unterkonstruktion 20.2 auf, welche einen Dachhimmel für den Fahrzeuginnenraum trägt. Im Verdeck 20 können nicht näher dargestellte Dämmmaterialien zur Schall bzw. Wärmedämmung angeordnet werden.

Wie aus Fig. 1 bis 5 weiter ersichtlich ist, ist der vordere erste Verdeckabschnitt 22 zumindest teilweise starr und/oder steif ausgeführt und mit einem ersten Ende 26.1 des faltbaren dritten Verdeckabschnitts 26 drehbeweglich verbunden. Ein zweites Ende 26.2 des faltbaren dritten Verdeckabschnitts 26 ist drehbeweglich mit dem hinteren zweiten Verdeckabschnitt 24 verbunden. Des Weiteren ist der vordere erste Verdeckabschnitt 22 mit der Schub- und/oder Zugvorrichtung 30 gekoppelt, welche den ersten Verdeckabschnitt 22 im Wesentlichen entlang der Fahrzeuglängsrichtung x bewegt. Dadurch schiebt der erste Verdeckabschnitt 22 den dritten Verdeckabschnitt 26 während des Öffnungsvorgangs über den zweiten Verdeckabschnitt 24. Während eines Schließvorgangs zieht der erste Verdeckabschnitt 22 den dritten Verdeckabschnitt 26 vom zweiten Verdeckabschnitt 24. Somit wirkt der erste Verdeckabschnitt 22 als Führungselement für den dritten Verdeckabschnitt 26. Das bedeutet, dass der erste Verdeckabschnitt 22 direkt von der Schub- und/oder Zugvorrichtung 30 bewegt wird. Da der dritte Verdeckabschnitt 26 mit dem ersten Verdeckabschnitt 22 verbunden ist, wird der dritte Verdeckabschnitt 26 über den ersten Verdeckabschnitt 22 von der Schub- und/oder Zugvorrichtung 30 angetrieben. Die Schub- und/oder Zugvorrichtung 30 ist mit einem einer Fahrzeugfont zugewandten Endbereich des ersten Verdeckabschnitts 22 verbunden und schleppt den ersten Verdeckabschnitt 22 mit dem dritten Verdeckabschnitt 26 beim Öffnen des Verdecks 20 in Richtung Fahrzeugheck und beim Schließen des Verdecks 20 in Richtung Fahrzeugfront. Bei dem dargestellten Ausführungsbeispiels sind die Verdeckabschnitte 22, 24, 26 in etwa gleich lang ausgeführt, so dass der zweite Verdeckabschnitt 24 in der in Fig. 3 dargestellten teilweise geöffneten Zwischenstellung des Verdecks 20 vor dem Absenken in die Ablagestellung unter dem dritten Verdeckabschnitt 26 angeordnet ist und der erste Verdeckabschnitt 22 über dem dritten Verdeckabschnitt 26 angeordnet ist. Das bedeutef, dass in der geöffneten Stellung des Verdecks 20 vor dem Absenken in die Ablagestellung die Außenseite des dritten Verdeckabschnitts 26 der Außenseite des zweiten Verdeckabschnitts 24 zugewandt ist und die Innenseite des ersten Verdeckabschnitts 22 der Innenseite des dritten Verdeckabschnitts 26 zugewandt ist. Alternativ kann die jeweilige Länge der Verdeckabschnitte 22, 24, 26 variiert werden. So kann der dritte Verdeckabschnitt 26 beispielsweise länger als der erste Verdeckabschnitt 22 und/oder länger als der zweite Verdeckabschnitt 24 ausgeführt werden,

Wie aus Fig. 1 bis 11 weiter ersichtlich ist, umfasst die Schub- und/oder Zugvorrichtung 30 mindestens eine Kette 31 mit mehreren Schub- und/oder Zugelementen 32, 32A, 32B, welche in einer im Bereich des zweiten Verdeckabschnitts 24 angeordneten Führung 35 geführt ist. Im dargestellten Ausführungsbeispiel umfasst die Schub- und/oder Zugvorrichtung 30 zwei Ketten 31, welche beispielsweise in Fahrzeuglängsrichtung x jeweils an den seitlichen Rändern des Verdecks 20 verlaufen. Bei einem alternativen nicht dargestellten Ausführungsbeispiel kann die Schub- und/oder Zugvorrichtung 30 nur eine Kette 31 umfassen, welche in Fahrzeuglängsrichtung x entlang einer Mittellängsachse des Verdecks 20 verläuft.

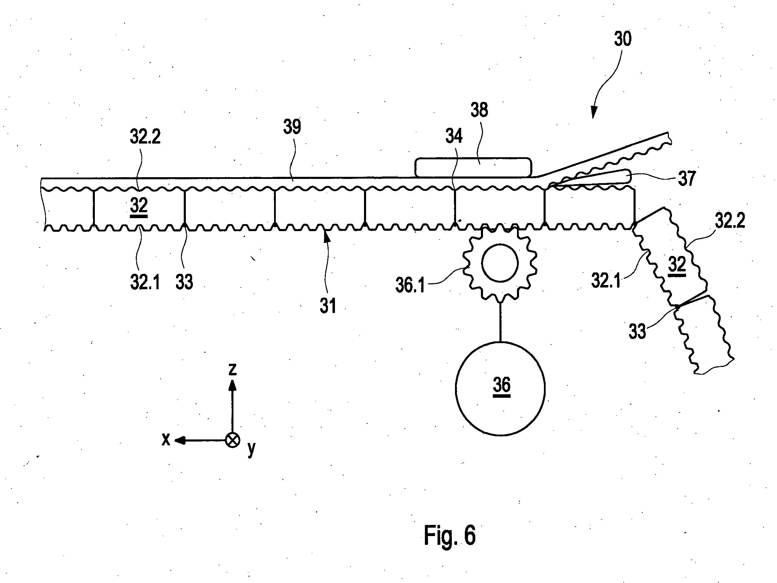

Wie insbesondere aus Fig. 6 bis 11 ersichtlich ist, sind jeweils zwei benachbarte Schub- und/oder Zugelemente 32, 32A, 32B über ein Drehgelenk 33 miteinander verbunden, wobei die zwei benachbarten Schub- und/oder Zugelemente 32, 32A, 32B durch Verriegelungsmittel 34, 34A, 34B gegeneinander verriegelbar sind. Die Schub- und/oder Zugvorrichtung 30 des dargestellten Verdecks 20 weist in Fahrzeuglängsrichtung x an beiden Seitenrändern eine Kette 31 mit korrespondierender Führung 35 auf. In den dargestellten Ausführungsbeispielen sind die einzelnen Schub- und/oder Zugelemente 32, 32A, 32B mit identischen Abmessungen und mit rechteckigem Querschnitt ausgeführt. Dadurch ergibt sich im Wesentlichen ein gerader Verlauf der Kette 31. Bei alternativen Ausführungsbeispielen können die einzelnen Schub- und/oder Zugelemente 32, 32A, 32B gebogen oder mit trapezförmigem Querschnitt ausgeführt werden, so dass die Schub- und/oder Zugelemente 32, 32A, 32B der Ober- und Unterseite unterschiedliche Kantenlängen aufweisen. Dadurch kann für die Kette 31 ein gekrümmter Verlauf vorgegeben werden. Zudem können die einzelnen Schub- und/oder Zugelemente 32, 32A, 32B der Kette 31 mit unterschiedlichen Abmessungen ausgeführt und dadurch besser an die Einbausituation angepasst werden.

Bei einem in Fig. 6 dargestellten Ausführungsbeispiel der Kette 31 der Schub- und/oder Zugvorrichtung 30 sind zwei benachbarte Schub- und/oder Zugelemente 32 durch einen Zahnriemen 39 gegeneinander verriegelbar. Hierzu greift eine Verzahnung des Zahnriemens 39 in korrespondierende Verzahnungen 32.2 der Schub- und/oder Zugelemente 32 ein und verriegelt die benachbarten Schub- und/oder Zugelemente 32 gegeneinander. Zudem kann der Zahnriemen 39 an einem Ende fest mit dem Ende der Kette 31 verbunden werden, mit welchem die Kette 31 am ersten Verdeckabschnitt 22 verbunden ist. Während des Öffnungsvorgangs des Verdecks 20 entriegelt ein Trennelement 37 die Verriegelung 34 zwischen zwei benachbarten Schub- und/oder Zugelementen 32 und trennt die Verzahnung des Zahnriemens 39 von der Verzahnung 32.2 des jeweiligen Schub- und/oder Zugelements 32. Des Weiteren verriegelt ein Verbindungselement 38 während des Schließungsvorgangs des Verdecks 20 die Verriegelungsmittel 34 zwischen zwei benachbarten Schub- und/oder Zugelementen 32 gegeneinander, indem es die Verzahnung des Zahnriemens 39 in die Verzahnung 32.2 des jeweiligen Schub- und/oder Zugelements 32 drückt. Im dargestellten Ausführungsbeispiel ist das Verbindungselement 38 an einem Übergangsbereich 7 zwischen dem zweiten Verdeckabschnitt 24 und dem dritten Verdeckabschnitt 26 in Öffnungsrichtung vor dem Trennelement 37 angeordnet. Alternativ ist es aber auch vorstellbar, die Kette 31 durch Gegenzug zu versteifen, so dass dann keine Verzahnung erforderlich ist.

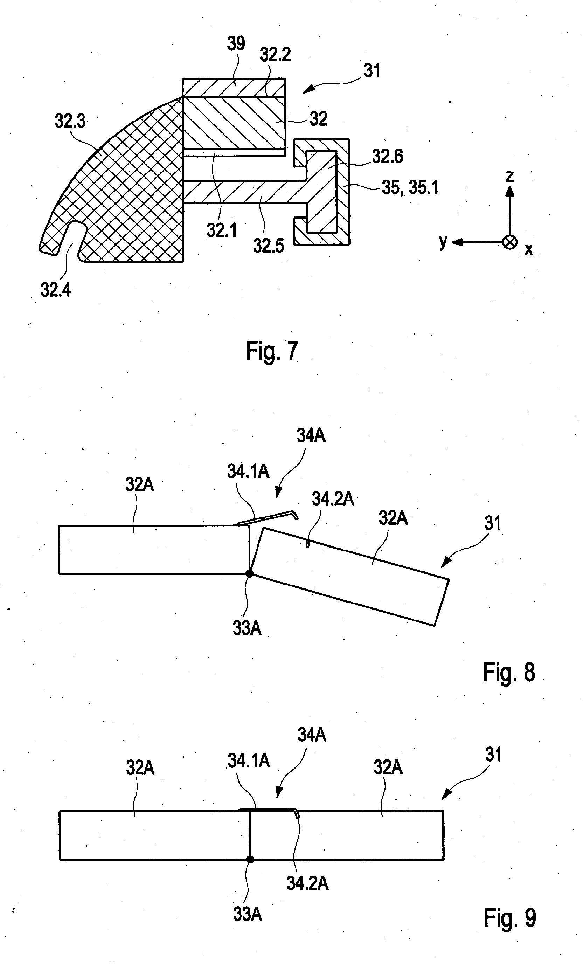

Bei einem in Fig. 8 und 9 dargestellten Ausführungsbeispiel der mindestens einen Kette 31 sind zwei benachbarte Schub- und/oder Zugelemente 32A jeweils durch Verriegelungshaken 34.1A gegeneinander verriegelt. Hierbei hintergreift im verriegelten Zustand der Verriegelungshaken 34.1A eines ersten Schub- und/oder Zugelements 32A einen korrespondierenden Verriegelungssteg 34.2A eines zweiten Schub- und/oder Zugelements 32A. Analog zu dem bereits beschriebenen Ausführungsbeispiel entriegelt ein nicht näher dargestelltes Trennelement die Verriegelung 34A zwischen zwei benachbarten Schub- und/oder Zugelementen 32A während des Öffnungsvorgangs des Verdecks 20 und trennt den Verriegelungshaken 34.1A von dem Verriegelungssteg 34.2A. Des Weiteren verriegelt ein nicht näher dargestelltes Verbindungselement während des Schließungsvorgangs des Verdecks 20 die Verriegelungsmittel 34A zwischen zwei benachbarten Schub- und/oder Zugelementen 32 gegeneinander.

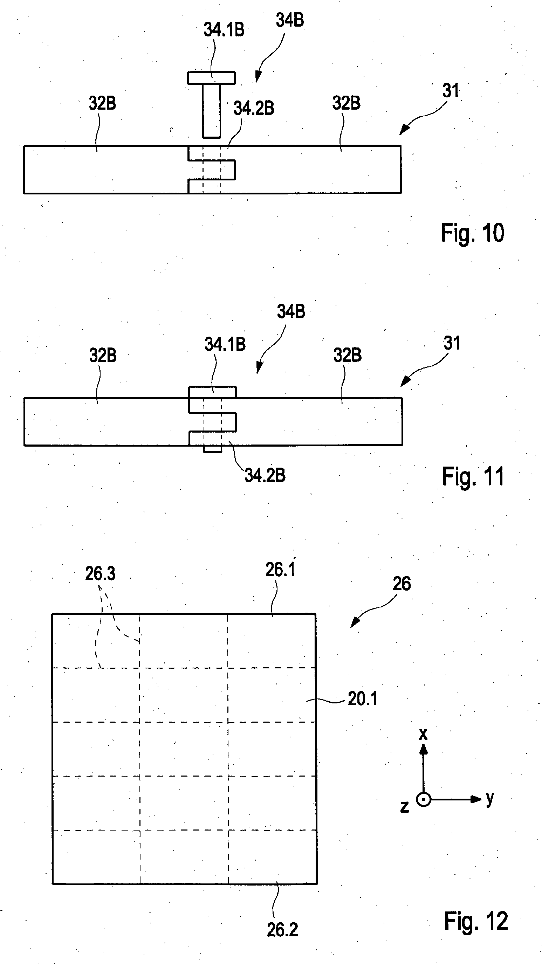

Bei einem in Fig. 10 und 11 dargestellten Ausführungsbeispiel der mindestens einen Kette 31 sind zwei benachbarte Schub- und/oder Zugelemente 32B jeweils durch Verriegelungsbolzen 34.1B gegeneinander verriegelt. Hierbei ist der Verriegelungsbolzen 34.1 B im verriegelten Zustand durch korrespondierende Verriegelungsöffnungen 34.2B der benachbarten Schub- und/oder Zugelemente 32B geführt. Auch bei diesem Ausführungsbeispiel entriegelt ein nicht näher dargestelltes Trennelement die Verriegelung 34B zwischen zwei benachbarten Schub- und/oder Zugelementen 32A während des Öffnungsvorgangs des Verdecks 20 und schiebt den Verriegelungsbolzen 34.1 B aus den Verriegelungsösen 34.2B. Des Weiteren verriegelt ein nicht näher dargestelltes Verbindungselement während des Schließungsvorgangs des Verdecks 20 die Verriegelungsmittel 34B zwischen zwei benachbarten Schub- und/oder Zugelementen 32 gegeneinander.

Wie aus Fig. 1 bis 11 weiter ersichtlich ist, umfasst die Schub- und/oder Zugvorrichtung 30 einen Antrieb 36, welcher die mindestens eine Kette 31 bewegt. Wie aus Fig. 6 weiter ersichtlich ist, ist der Antrieb 36 im dargestellten Ausführungsbeispiel über ein Antriebsritzel 36.1 mit der mindestens einen Kette 31 gekoppelt. Hierbei ist an den einzelnen Schub- und/oder Zugelemente 32 jeweils eine weitere Verzahnung 32.1 angeordnet, welche von dem Antriebsritzel 36.1 gekämmt wird. Alternativ kann der Antrieb 36 über einen nicht näher dargestellten Seilzug mit der mindestens einen Kette 31 gekoppelt werden und diese antreiben.

Wie aus Fig. 7 weiter ersichtlich ist, kann an den Schub- und/oder Zugelementen 32 jeweils eine Scheibendichtung 32.3 mit einem Aufnahmeschlitz 32.4 angeordnet werden, in welchen ein freier Rand einer nicht dargestellten Seitenscheibe einfahrbar ist. Wie aus Fig. 7 weiter ersichtlich ist, sind die einzelnen Schub- und/oder Zugelemente 32 über eine Verbindung 32.5 mit einer Führungsnocke 32.6 verbunden, welche in der Führung 35 geführt ist. Wie aus Fig. 1 bis 4 ersichtlich ist, umfasst die Führung 35 einen ersten Führungsteil 35.1 und einen zweiten Führungsteil 35.2, welche über ein als Kippgelenk ausgeführtes Koppelelement 35.3 miteinander verbunden sind und eine Kurvenbahn zur Führung der mindestens einen Kette 31 vorgeben. Hierbei ist das erste Führungsteil 35.1 gemeinsam mit dem hinteren zweiten Verdeckabschnitt 24 über eine Hebe- und Senkvorrichtung 24.1 in die Ablagestellung versenkbar bzw. verschwenkbar.

Wie aus Fig. 12 weiter ersichtlich ist, weist der dritte Verdeckabschnitt 26 im dargestellten Ausführungsbeispiel in Längsrichtung x und/oder in Querrichtung y mindestens ein Stützelement 26.3 auf. Zudem kann der dritte Verdeckabschnitt 26 aus einem elastischen Material gefertigt, welches nach einer Belastung in seine Ausgangstellung zurückkehrt. Dieses elastische Material kann beispielsweise den wasserdichten und winddichten Verdeckstoff 20.1 ausbilden. Im dargestellten Ausführungsbeispiel umfasst der dritte Verdeckabschnitt 26 zwei in Fahrzeuglängsrichtung x verlaufende Stützelemente 26.3 und sechs in Fahrzeugquerrichtung y verlaufende Stützelemente 26.3. Hierbei bilden die Stützelemente 26.3 ein Gerippe aus, über welches das elastische Material gespannt ist. Diese Kombination aus elastischem Material und Stützelementen 26.3 kann während des Öffnungsvorgangs gefaltet werden und kehrt während des Schließvorgangs des Fahrzeugdachs 2 wieder in die Ausgangslage zurück. Das mindestens eine Stützelement 26.3 kann beispielsweise als aufblasbares Element und/oder als faltbares Metallelement und/oder Kunststoffelement ausgeführt werden.

Wie aus Fig. 1 bis 4 weiter ersichtlich ist, kann der erste Verdeckabschnitt 22 über mindestens ein Verrieglungselement 5.1 mit dem Windschutzscheibenquerträger 5 verriegelt werden. Im dargestellten Ausführungsbeispiel ist das mindestens eine Verriegelungselement 5.1 als ausfahrbares Luftleitelement ausgeführt, welches im geschlossenen Verdeckzustand eingefahren ist und den ersten Verdeckabschnitt 22 am Windschutzscheibenquerträger 5 festlegt. Vor dem Öffnungsvorgang des Verdecks 20 wird das Luftleitelement 5.1 ausgefahren und gibt den ersten Verdeckabschnitt 22 frei. Im geöffneten Verdeckzustand kann das Luftleitelement 5.1 nach Bedarf ausgefahren oder eingefahren werden, um eine Luftleitfunktion in Form eines so genannten "Aircap" auszuführen. Alternativ kann der erste Verdeckabschnitt 22 herkömmlich erste Verrieglungselemente aufweisen, welche mit korrespondierenden im bzw. am Windschutzscheibenquerträger 5 angeordneten zweiten Verrieglungselementen zusammenwirken, um das Verdeck 20 im geschlossenen Zustand am Windschutzscheibenquerträger 5 festzulegen. Hierbei können die ersten Verrieglungselemente als Riegel bzw. Verriegelungshaken bzw. Aufnahmen ausgeführt werden, welche mit korrespondierenden als Aufnahmen bzw. Riegel bzw. Verriegelungshaken ausgeführten zweiten Verriegelungselementen am Windschutzscheibenquerträger 5 zusammenwirken.

### BEZUGSZEICHENLISTE

- 1: Fahrzeug
- 2: Fahrzeugdach
- 4: Windschutzscheibe
- 5: Windschutzscheibenquerträger
- 5.1: Verrieglungselement (Aircap)
- 6: erster Übergangsbereich
- 7: zweiter Übergangsbereich
- 20: Verdeck
- 20.1: Verdeckstoff
- 20.2: Unterkonstruktion
- 22: erster Verdeckabschnitt
- 22.1: Verrieglungsbereich
- 24: zweiter Verdeckabschnitt
- 24.1: Heckscheibe
- 24.2: Hebe- und Senkvorrichtung
- 26: dritter Verdeckabschnitt
- 26.1: vorderes Ende
- 26.2: hinteres Ende
- 26.3: Stützelement
- 30: Schub- und/oder Zugvorrichtung
- 31: Kette
- 32, 32A, 32B: Schub- und/oder Zugelement
- 32.1: erste Verzahnung
- 32.2: zweite Verzahnung
- 32.3: Scheibendichtung
- 32.4: Aufnahmeschlitz
- 32.5: Verbindung
- 32.6: Führungsnocke
- 33: Drehgelenk
- 34, 34A, 34B: Verriegelung
- 34.1A: Verriegelungshaken
- 34.1B: Verriegelungsbolzen
- 34.2A: Verriegelungssteg
- 34.2B: Verriegelungsöse
- 35: Führung (Kurvenbahn)
- 35.1: erstes Führungsteil
- 35.2: zweites Führungsteil
- 35.3: Koppelelement
- 36: Antrieb
- 36.1: Antriebsritzel
- 37: Trennelement
- 38: Verbindungselement
- 39: Zahnriemen
- x: Fahrzeuglängsrichtung
- y: Fahrzeugquerrichtung
- z: Fahrzeughochrichtung

## Patentansprüche

1. Verdeck (20) für ein öffnungsfähiges Fahrzeugdach (2), welches mindestens zwei Verdeckabschnitte (22, 24, 26) aufweist, wobei ein vorderer erster Verdeckabschnitt (22) mit einem Windschutzscheibenquerträger (5) koppelbar ist, wobei mindestens ein Verdeckabschnitt (21, 23) verschiebbar ausgeführt ist und ein hinterer zweiter Verdeckabschnitt (24) schwenkbar und/oder absenkbar ausgeführt ist, **dadurch gekennzeichnet, dass** ein dritter Verdeckabschnitt (26) flexibel ausgeführt und zwischen dem ersten Verdeckabschnitt (22) und zweiten Verdeckabschnitt (24) angeordnet ist und durch eine selbsttragende Schub- und/oder Zugvorrichtung (30) angetrieben ist, wobei der dritte Verdeckabschnitt (26) bei einem Öffnungsvorgang derart über den hinteren zweiten Verdeckabschnitt (24) faltbar ist, dass nach dem Faltvorgang eine Außenseite des dritten Verdeckabschnitts (26) einer Außenseite des zweiten Verdeckabschnitts (24) zugewandt ist.

2. Verdeck nach Anspruch 1, **dadurch gekennzeichnet, dass** der vordere erste Verdeckabschnitt (22) zumindest teilweise starr und/oder steif ausgeführt und mit einem ersten Ende (26.1) des faltbaren dritten Verdeckabschnitts (26) drehbeweglich verbunden ist.

3. Verdeck nach Anspruch 1 oder 2, **dadurch gekennzeichnet, dass** ein zweites Ende (26.2) des faltbaren dritten Verdeckabschnitts (26) drehbeweglich mit dem hinteren zweiten Verdeckabschnitt (24) verbunden ist.

4. Verdeck nach einem der Ansprüche 1 bis 3, **dadurch gekennzeichnet, dass** der vordere erste Verdeckabschnitt (22) mit der Schub- und/oder Zugvorrichtung (30) gekoppelt ist, welche den ersten Verdeckabschnitt (22) im Wesentlichen entlang der Fahrzeuglängsrichtung (x) bewegt, wobei der erste Verdeckabschnitt (22) den dritten Verdeckabschnitt (26) während des Öffnungsvorgangs über den zweiten Verdeckabschnitt (24) schiebt und während eines Schließvorgangs vom zweiten Verdeckabschnitt (24) zieht.

5. Verdeck nach einem der Ansprüche 1 bis 4, **dadurch gekennzeichnet, dass** die Schub- und/oder Zugvorrichtung (30) mindestens eine Kette (31) mit mehreren Schub- und/oder Zugelementen (32, 32A, 32B) umfasst, welche in einer im Bereich des zweiten Verdeckabschnitts (24) angeordneten Führung (35) geführt ist.

6. Verdeck nach Anspruch 5, **dadurch gekennzeichnet, dass** an den Schub- und/oder Zugelementen (32) jeweils eine Scheibendichtung (32.3) mit einem Aufnahmeschlitz (32.4) angeordnet ist, in welchen ein freier Rand einer Seitenscheibe einfahrbar ist.

7. Verdeck nach Anspruch 5 oder 6, **dadurch gekennzeichnet, dass** jeweils zwei benachbarte Schub- und/oder Zugelemente (32, 32A, 32B) über ein Drehgelenke (33) miteinander verbunden sind, wobei die zwei benachbarten Schub- und/oder Zugelemente (32, 32A, 32B) durch Verriegelungsmittel (34, 34A, 34B) gegeneinander verriegelbar sind.

8. Verdeck nach einem der Ansprüche 5 bis 7, **dadurch gekennzeichnet, dass** die Schub- und/oder Zugvorrichtung (30) einen Antrieb (36) aufweist, welcher die mindestens eine Kette (31) bewegt.

9. Verdeck nach Anspruch 8, **dadurch gekennzeichnet, dass** der Antrieb (36) über ein Antriebsritzel (36.1) oder einen Seilzug mit der mindestens einen Kette (31) gekoppelt ist.

10. Verdeck nach einem der Ansprüche 5 bis 9, **dadurch gekennzeichnet, dass** zwei benachbarte Schub- und/oder Zugelemente (32, 32A, 32B) durch einen Zahnriemen (39) oder einen Verriegelungshaken (34.1A) oder einen Verriegelungsbolzen (34.1 B) gegeneinander verriegelbar sind.

11. Verdeck nach Anspruch 10, **dadurch gekennzeichnet, dass** ein Trennelement (37) während des Öffnungsvorgangs des Verdecks (20) die Verriegelungsmittel (34, 34A, 34B) zwischen zwei benachbarten Schub- und/oder Zugelementen (32) entriegelt.

12. Verdeck nach Anspruch 10 oder 11, **dadurch gekennzeichnet, dass** ein Verbindungselement (38) während des Schließungsvorgangs des Verdecks (20) die Verriegelungsmittel (34, 34A, 34B) zwischen zwei benachbarten Schub- und/oder Zugelementen (32) gegeneinander verriegelt.

13. Verdeck nach Anspruch 12, **dadurch gekennzeichnet, dass** das Verbindungselement (38) an einem Übergangsbereich (7) zwischen dem zweiten Verdeckabschnitt (24) und dem dritten Verdeckabschnitt (26) in Öffnungsrichtung vor dem Trennelement (37) angeordnet ist.

14. Verdeck nach einem der Ansprüche 1 bis 13, **dadurch gekennzeichnet, dass** der dritte Verdeckabschnitt (26) aus einem elastischen Material gefertigt ist, welches nach einer Belastung in eine Ausganglage zurückkehrt.

15. Verdeck nach einem der Ansprüche 1 bis 14, **dadurch gekennzeichnet, dass** der dritte Verdeckabschnitt (26) in Längsrichtung (x) und/oder in Querrichtung (y) mindestens ein Stützelement (26.3) aufweist.

16. Verdeck nach Anspruch 15, **dadurch gekennzeichnet, dass** das mindestens eine Stützelement (26.3) als aufblasbares Element und/oder als faltbares Metalleläment und/oder Kunststoffelement ausgeführt ist.

17. Verdeck nach einem der Ansprüche 1 bis 16, **dadurch gekennzeichnet, dass** der erste Verdeckabschnitt (22) über mindestens ein Verrieglungselement (5.1) mit dem Windschutzscheibenquerträger (5) verriegelbar ist.

18. Verdeck nach Anspruch 17, **dadurch gekennzeichnet, dass** das mindestens eine Verriegelungselement (5.1) als ausfahrbares Luftleitelement ausgeführt ist, welches im geschlossenen Verdeckzustand eingefahren ist und den ersten Verdeckabschnitt (22) am Windschutzscheibenquerträger (5) festlegt.

19. Verdeck nach Anspruch 18, **dadurch gekennzeichnet, dass** das Luftleitelement (5.1) vor dem Öffnungsvorgang des Verdecks (20) ausgefahren ist und den ersten Verdeckabschnitt (22) freigibt, wobei das Luftleiteleffient (5.1) im geöffneten Verdeckzustand ausgefahren oder eingefahren ist.
